(19) Europäisches Patentamt
European Patent Office
Office européen des brevets

(11) EP 4 266 420 A1

(12) **EUROPEAN PATENT APPLICATION**
published in accordance with Art. 153(4) EPC

(43) Date of publication:
**25.10.2023 Bulletin 2023/43**

(21) Application number: **21906878.0**

(22) Date of filing: **15.11.2021**

(51) International Patent Classification (IPC):
***H01M 4/525*** (2010.01) ***H01M 4/505*** (2010.01)
***C01G 53/00*** (2006.01) ***H01M 10/052*** (2010.01)

(52) Cooperative Patent Classification (CPC):
**C01G 53/00; H01M 4/505; H01M 4/525; H01M 10/052;** Y02E 60/10

(86) International application number:
**PCT/KR2021/016671**

(87) International publication number:
**WO 2022/131573 (23.06.2022 Gazette 2022/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.12.2020 KR 20200178507**

(71) Applicants:
- **POSCO Holdings Inc.**
  **Seoul 06194 (KR)**
- **RESEARCH INSTITUTE OF INDUSTRIAL SCIENCE & TECHNOLOGY**
  **Pohang-si, Gyeongsangbuk-do 37673 (KR)**
- **POSCO Chemical Co., Ltd**
  **Gyeongsangbuk-do 37918 (KR)**

(72) Inventors:
- **LEE, Sanghyuk**
  **Incheon 22405 (KR)**
- **PARK, Jong Il**
  **Pohang-si, Gyeongsangbuk-do 37666 (KR)**
- **SONG, Jung Hoon**
  **Gwacheon-si, Gyeonggi-do 13835 (KR)**
- **NAM, Sang Cheol**
  **Seoul 02587 (KR)**
- **CHOI, Kwon Young**
  **Seoul 07987 (KR)**
- **PARK, Inchul**
  **Incheon 22008 (KR)**
- **KWON, Ohmin**
  **Incheon 22018 (KR)**

(74) Representative: **Potter Clarkson**
**Chapel Quarter**
**Mount Street**
**Nottingham NG1 6HQ (GB)**

# (54) POSITIVE ACTIVE MATERIAL FOR RECHARGEABLE LITHIUM BATTERY, METHOD FOR MANUFACTURING SAME, AND RECHARGEABLE LITHIUM BATTERY COMPRISING SAME

(57) A positive electrode active material for a lithium secondary battery, a manufacturing method thereof, and a lithium secondary battery including the same, wherein the positive electrode active material is a lithium nickel-based compound particle having a Ni content of 75 mol% or more, and a difference in concentration of Al between the center and the surface in the lithium nickel-based compound particle is less than 1 mol%.

【FIG. 1】

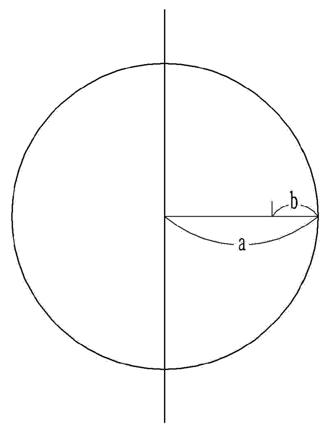

## Description

### Field of the Invention

It is about the positive electrode active material for lithium secondary battery, its manufacturing method, and the lithium secondary battery including it.

### Description of the Related Art

Recently, due to the explosive increase in demand for electric vehicles and the demand for increased mileage, the development of secondary batteries with high-capacity and a high energy density that can be applied to them is actively progressing worldwide.

Particularly, in order to manufacture such a high-capacity battery, a high-capacity positive electrode active material is required. As such a high-capacity positive electrode active material, a method of applying a lithium nickel-cobalt-manganese-based positive electrode active material having a high nickel content has been proposed.

However, the lithium nickel-cobalt-manganese based positive electrode active material with high nickel content has a problem that the decomposition temperature is lowered when the temperature is increased in the charged state due to the increase in structural instability due to the increase in nickel content.

## SUMMARY OF THE INVENTION

One embodiment is to provide a positive electrode active material for a lithium secondary battery that reduces initial resistance and resistance increase rate while maintaining capacity and has excellent thermal stability.

Another embodiment is to provide a manufacturing method of a positive electrode active material for a lithium secondary battery.

Another embodiment is to provide a lithium secondary battery including the positive electrode active material.

The positive electrode active material for a lithium secondary battery according to one embodiment is a lithium nickel-based compound particle having a Ni content of 75 mol% or more, and a concentration difference of Al between the center and surface of the lithium nickel-based compound particle is 1 mol% or less can

The average particle diameter D50 of the lithium nickel-based compound particle may be 10 $\mu$m to 20 $\mu$m.

The lithium nickel-based compound particle may be represented by Chemical Formula 1 below.

[Chemical Formula 1] $Li_aNi_xCo_yMn_zAl_{1-(x+y+z)}O_2$

In the Chemical Formula 1,
a is $0.95 \leq a \leq 1.15$, x is $0.75 \leq x \leq 0.98$, y is $0 < y < 0.2$, z is $0 < z < 0.2$, and $y+z \leq 0.25$.

In one embodiment, x+y+z in the Chemical Formula 1 may range from 0.98 to 0.999.

The surface portion may be a region corresponding to a depth of 30% or less of an average radius of the lithium nickel-based compound particle in a depth direction from the uppermost surface of the lithium nickel-based compound particle.

Manufacturing method of a positive electrode active material for a lithium secondary battery according to another embodiment includes the steps of preparing a precursor compound by co-precipitation of nickel raw material, cobalt raw material and manganese raw material, and aluminum raw material in a solvent; generating a mixture by mixing the precursor compound and lithium source material; and sintering the mixture.

The co-precipitation step can be carried out at a pH of 11.0 to 12.0.

In addition, a Al content in the lithium nickel-based compound may be 0.1 mol% to 2 mol% based on all metal elements except lithium in the lithium nickel-based compound particle.

A lithium secondary battery according to another embodiment may include a positive electrode, a negative electrode, and a non-aqueous electrolyte including the positive electrode active material.

In the positive electrode active material for a lithium secondary battery according to one embodiment, Al is uniformly included throughout the positive electrode active material, thereby securing high-capacity while improving room temperature and high temperature cycle-life characteristics and simultaneously improving thermal stability. It can provide a lithium secondary battery with an excellent initial resistance characteristic and a significantly reduced resistance increase rate.

## BRIEF DESCRIPTION OF THE DRAWINGS

FIG. 1 is a drawing to explain the surface of the positive electrode active material particle for lithium secondary battery.
FIG. 2 is shown the result of analyzing the Al element present in the positive electrode active material manufactured according to embodiment 3.
FIG. 3 is the result of analyzing the Al element present inside the positive electrode active material manufactured according to Comparative Example 4.

## DETAILED DESCRIPTION OF THE EMBODIMENTS

Hereinafter, embodiments of the present invention will be described in detail. However, this is presented as an example, and the present invention is not limited thereby, and the present invention is only defined by the scope of claims to be described later.

In this specification, unless otherwise noted, % means wt%, and 1ppm means 0.0001 wt%.

The positive electrode active material for a lithium secondary battery according to an embodiment is a lithium nickel-based compound particle having a Ni content of 75 mol% or more, and a concentration difference of Al between the center and surface of the lithium nickel-based compound particle is 1 mol% or less can

According to one embodiment, a difference in concentration of Al between the center and the surface of the lithium nickel-based compound particle may be 0 mol% to 1 mol%. In one embodiment, the difference in Al concentration between the center and the surface of 0 mol% means substantially the same. The concentration of Al in the center and the surface means the average concentration of Al present in each area, and the difference in concentration only means the difference between the Al concentration in the center and the surface, and the Al concentration in the center is at most 1 mol% does not mean only large ones. For example, the central Al concentration is 0.52 mol%, the surface Al concentration is 0.45 mol%, the central Al concentration may be larger than the surface, the central Al concentration is 0.92 mol%, and the surface Al concentration is 0.97 mol%, the center Al concentration may be smaller than the surface Al concentration.

In addition, the fact that the difference in Al concentration, a doping element, between the center and the surface is included within the range means that Al exists substantially uniformly throughout the positive electrode active material particle, that is, this means that there is virtually no difference of the Al concentration, a doping element, at the center and surface.

In this way, when Al, the doping element, is positioned at a uniform concentration throughout the positive electrode active material particle, the positive electrode active material can significantly improve the room temperature and high temperature cycle characteristics while maintaining high-capacity. In addition, since lithium ion can form a smooth path, initial resistance and resistance increase rate can be reduced, and structural stability can be secured, thereby improving thermal stability.

Herein, the surface portion means an area corresponding to a depth of 30% or less of the lithium nickel compound particle average radius in a depth direction from the uppermost surface of the lithium nickel compound particle. This is referring to FIG. 1, to explain, means the area corresponding to the depth (b) of 30% or less of the radius (a) in the depth direction from the uppermost surface of the lithium nickel-based compound particle. For example, if the particle diameter of the lithium nickel-based compound particle is 10 μm, the radius is 5 μm, and therefore, a region corresponding to 1.5 μm in the depth direction (i.e., toward the center) from the uppermost surface means the surface portion.

In one embodiment, the lithium nickel-based compound particle may be represented by Chemical Formula 1 below.

[Chemical Formula 1] $Li_aNi_xCo_yMn_zAl_{1-(x+y+z)}O_2$

In the Chemical Formula 1,
a is $0.95 \leq a \leq 1.15$, x is $0.75 \leq x \leq 0.98$, y is $0 < y < 0.2$, z is $0 < z < 0.2$, and $y+z \leq 0.25$.

In one embodiment, x+y+z in the Chemical Formula 1 may range from 0.98 to 0.999, more specifically from 0.99 to 0.999. That is, the content of Al of the doping element may range from 0.1 mol% to 2 mol%, and may range from 0.1 mol% to 1 mol% based on the entire metal element except for lithium in the lithium nickel compound particle. When the content of the doping element satisfies the range, it is possible to realize a positive electrode active material with excellent high-capacity and simultaneous room temperature and high temperature cycle-life characteristics.

In one implementation, the x may be 0.80 to 0.96. That is, the lithium nickel-based compound is a high-nickel (high-Ni) compound having a nickel content of 75 mol% or more, and can implement a positive electrode active material having a high power characteristic. Since the positive electrode active material according to one embodiment having such a composition has a high energy density per volume, the capacity of a battery to which it is applied can be improved, and is also suitable for use in an electric vehicle.

The tap density of the positive electrode active material may range from 2.3g/cc to 2.7g/cc, more specifically, from 2.45g/cc to 2.7g/cc. If the tap density satisfies the range, since many positive electrode active materials can be

injected into the electrode of the same volume, the energy density per volume can be increased. Accordingly, the inside primary particles can be protected by HF generated from decomposed in the lithium salt in the electrolyte solution, for example $LiPF_6$. Through this, the cycle-life characteristics of lithium secondary batteries can be improved.

The average particle diameter D50 of the positive electrode active material may range from 10 μm to 20 μm, more specifically from 12 μm to 18 μm. In the co-precipitation process, since it reacts in a pH range similar to that of other metal materials, it is possible to uniformly position the doping element inside the particle without adjusting the pH range, and it can be grown into an active material with the above average particle diameter. Since the positive electrode active material according to an embodiment may be a single particle or a secondary particle having a large particle size in which at least one primary particle having a small particle size is assembled, the average particle size D50 may be the particle size of the secondary particle. In this case, the average particle diameter D50 of the secondary particles only needs to be included in the range, and the average particle diameter D50 of the primary particles does not need to be limited.

Unless otherwise defined in this specification, average particle diameter D50 means the diameter of particles whose cumulative volume is 50% by volume in the particle size distribution, and can be measured with a particle size analyzer (PSA).

As such, since the positive electrode active material of the present exemplary embodiment manufactures a positive electrode active material after manufacturing an Al-doped precursor by injecting Al raw material as a doping element in the co-precipitation process during precursor manufacturing, the concentration of Al throughout the particle is uniform. Therefore, the lithium secondary battery to which the positive electrode active material of this exemplary embodiment is applied exhibits excellent discharge capacity and simultaneously, improved initial efficiency, excellent room temperature and high temperature cycle-life characteristics. In addition, the initial resistance, resistance increase rate, average leakage current, heating peak temperature and heating value can be significantly reduced.

Manufacturing method of a positive electrode active material for a lithium secondary battery according to another embodiment includes the steps of preparing a precursor compound by co-precipitation of nickel raw material, cobalt raw material and manganese raw material, and aluminum raw material in a solvent; generating a mixture by mixing the precursor compound and lithium source material; and sintering the mixture.

Hereinafter, the manufacturing method will be described in more detail. Specific characteristics of the positive electrode active material prepared by the above method are the same as those described in one embodiment, and will be omitted here.

First, a precursor compound is prepared by co-precipitation of nickel raw material, cobalt raw material, manganese raw material and aluminum raw material in a solvent.

The nickel raw material may be a hydroxide, oxide, carbonate, sulfate, nitrate, a hydrate thereof, or a combination thereof containing nickel. The cobalt raw material may be a hydroxide, oxide, carbonate, sulfate, nitrate, a hydrate thereof, or a combination thereof including cobalt. In addition, the manganese raw material may be a hydroxide, oxide, carbonate, sulfate, nitrate, a hydrate thereof, or a combination thereof containing manganese.

The aluminum raw material may $Al_2(SO_4)_3$, $Al(NO_3)_3$, $Al_2(CO_3)_3$ or a combination thereof. Other than the aluminum raw material, $Al(OH)_3$ is not soluble in water, so it cannot be applied to the co-precipitation process according to one embodiment.

As such, since the manufacturing method of the positive electrode active material according to one embodiment is added in the co-precipitation process for manufacturing a precursor, aluminum raw material including aluminum as a doping element together with nickel, cobalt, and manganese raw material, there is no need to carry out a separate co-precipitation process. In addition, since the aluminum raw material is added in the co-precipitation process for manufacturing the precursor, Al is included uniformly throughout the positive electrode active material, which is the final product, for example, a concentration difference Al in the center and surface may be 1 mol% or less, 0 mol% to 1 mol%.

The mixing ratio of the nickel raw material, the cobalt raw material, the manganese raw material and the aluminum raw material can be appropriately adjusted so that the composition of Chemical Formula 1 as the final active material is obtained.

Water may be used as the solvent.

The co-precipitation process can be performed by purging inert gas to prevent oxidation of metal ions, and can be performed at 20 °C to 60 °C temperature.

The inert gas may be $N_2$, argon gas or a combination thereof.

In addition, the co-precipitation reaction can be carried out by adding a chelating agent and a pH adjusting agent to the metal salt aqueous solution. The chelating agent may be $NH_4(OH)$, $C_3H_6O_3$, or a combination thereof, and the pH adjusting agent may be NaOH, $NaCO_3$, $NH_4HCO_3$ or a combination thereof.

The amount of the chelating agent can be appropriately adjusted so that the co-precipitation process takes place, and the pH adjusting agent can be used by appropriately adjusting the co-precipitation process to occur under pH conditions of 6.5 to 8 and 11.0 to 12.0. If the pH of the co-precipitation process is included in the range, there may be merits such as less generation of fine particles, increased sphericity of the surface, and improved electrochemical

characteristics.

The drying process can be carried out at 100 ° C to 160 ° C for 1 hour to 24 hours.

A filtration process may be further carried out before the drying process. This filtration process can be carried out by a conventional method.

A mixture is created by mixing the precursor compound and lithium raw material. The mixing ratio of the precursor compound and the lithium raw material may be appropriately adjusted so as to obtain a desired product composition of Chemical Formula 1.

The raw material for lithium may be a hydroxide, oxide, carbonate, sulfate, nitrate, hydrate or combination thereof containing lithium.

Subsequently, the mixture is sintered to prepare a positive electrode active material for a lithium secondary battery.

The sintering process can be carried out with an oxygen inflow of 500 L/min to 1,000 L/min. In addition, the sintering process is, for example, held at 300 °C to 500 °C for 1 hour to 5 hours, and then heated to 700 °C to 900 °C at a heating rate of 1 °C/min to 3 °C/min. After raising the temperature to the range, it can be carried out as a process of maintaining at this temperature for 8 hours to 15 hours.

After the sintering process, a water washing process may be further performed to remove residual lithium on the surface.

According to another embodiment, a lithium secondary battery including a positive electrode, a negative electrode and an electrolyte is provided.

The positive electrode includes a current collector and a positive electrode active material layer including a positive electrode active material formed on the current collector. The positive electrode active material includes a positive electrode active material according to an embodiment.

In the positive electrode, the content of the positive electrode active material may be 90 wt% to 98 wt% with respect to the entire weight of the positive electrode active material layer.

In one embodiment, the positive electrode active material layer may further include a binder and a conductive material. In this case, the content of the binder and the conductive material may be 1 wt% to 5 wt%, respectively, with respect to the entire weight of the positive electrode active material layer.

The binder serves to attach the positive electrode active material particles well to each other and to attach the positive electrode active material to the current collector well. Representative examples of the binder include polyvinyl alcohol, carboxymethylcellulose, hydroxypropylcellulose, diacetylcellulose, polyvinylchloride, carboxylated polyvinylchloride, polyvinylfluoride, polymers containing ethylene oxide, polyvinylpyrrolydone, polyurethane, polytetrafluoroethylene, polyvinylidene fluoride, polyethylene, polypropylene, styrene-butadiene rubber, acrylated styrene-butadiene rubber, epoxy resin, nylon, etc. may be used, but are not limited thereto.

The conductive material is used to impart conductivity to the electrode, and any electronic conductive material can be used without causing chemical change in the battery to be configured. Examples of the conductive material include carbon-based materials such as natural graphite, artificial graphite, carbon black, acetylene black, ketchen black, and carbon fiber; metal-based materials such as metal powder or metal fibers such as copper, nickel, aluminum, and silver; conductive polymers such as polyphenylene derivatives; or a conductive material containing a mixture thereof.

As the current collector, aluminum foil, nickel foil, or a combination thereof may be used, but is not limited thereto.

The positive electrode active material layer is formed by mixing the positive electrode active material, a binder and optionally a conductive material in a solvent to prepare an active material composition, and applying the active material composition to a current collector. Since such an active material layer formation method is widely known in the art, a detailed description thereof will be omitted in this specification. As the solvent, N-methylpyrrolidone and the like can be used, but is not limited thereto.

The negative electrode may include a current collector and a negative active material layer formed on the current collector and including the negative active material according to an embodiment.

In the negative active material layer, the content of the negative active material in the negative active material layer may be 80 wt% to 98 wt% with respect to the entire weight of the negative active material layer.

The negative active material layer includes a binder and may optionally further include a conductive material. The content of the binder in the negative active material layer may be 1 wt% to 5 wt% based on the entire weight of the negative active material layer. In addition, when the conductive material is further included, 90 wt% to 98 wt% of the negative active material, 1 wt% to 5 wt% of the binder, and 1 wt% to 5 wt% of the conductive material may be used.

The negative active material includes a material capable of intercalating/deintercalating lithium ions reversibly, lithium metal, an alloy of lithium metal, a material capable of doping and undoping lithium, or a transition metal oxide.

A material that can intercalate/deintercalate the lithium ion reversibly is a carbon material, any generally-used carbon-based negative active material can be used in a lithium ion secondary battery, and typical examples thereof include crystalline carbon, amorphous carbon or combination thereof.

The alloy of the lithium metal is from the group consisting of lithium and Na, K, Rb, Cs, Fr, Be, Mg, Ca, Sr, Si,

Sb, Pb, In, Zn, Ba, Ra, Ge, Al and Sn. Any alloy of selected metals may be used.

Materials capable of doping and undoping the lithium include Si, SiOx ($0 < x < 2$), Si-Y alloy (the Y is an element selected from the group consisting of an alkali metal, an alkaline earth metal, a group 13 element, a group 14 element, a transition metal, and a rare earth element and its combination thereof, but not Si), Sn, $SnO_2$, Sn-Y (the Y is an element selected from the group consisting of an alkali metal, an alkaline earth metal, a group 13 element, a group 14 element, a transition metal, a rare earth element and the combination thereof, not Sn), and the like.

Examples of the transition metal oxide include vanadium oxide and lithium vanadium oxide. The negative active material layer also includes a binder and may optionally further include a conductive material.

The binder serves to adhere the negative active material particles to each other well and to adhere the negative active material to the current collector well. As the binder, a non-aqueous binder, an aqueous binder, or a combination thereof may be used.

The non-aqueous binders include ethylenepropylene copolymer, polyacrylnitrile, polystyrene, polyvinyl chloride, carboxylated polyvinyl chloride, polyvinyl fluoride, polyurethane, polytetrafluoroethylene, polyvinylidene fluoride, polyethylene, polypropylene, polyamideimide, polyimide or a combination thereof.

As the aqueous binder, styrene-butadiene rubber, acrylated styrene-butadiene rubber, acrylonitrile-butadiene rubber, acryl rubber, butyl rubber, fluororubber, polymers containing ethylene oxide, polyvinylpyrrolidone, and polyepichlorohydrine, polyphosphazene, ethylenepropylene diene copolymer, polyvinylpyridine, chlorosulfonated polyethylene, latex, polyester resin, acryl resin, phenol resin, epoxy resin, polyvinyl alcohol or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. Na, K or Li can be used as the alkali metal. The amount of the thickener used may be 0.1 part by weight to 3 parts by weight with respect to 100 parts by weight of the negative active material.

The conductive material is used to impart conductivity to the electrode, and any electronic conductive material can be used without causing chemical change in the battery. Examples of the conductive material include carbon-based materials such as natural graphite, artificial graphite, carbon black, acetylene black, ketchen black, and carbon fiber; metal-based materials such as metal powder or metal fibers such as copper, nickel, aluminum, and silver; conductive polymers such as polyphenylene derivatives; or a conductive material containing a mixture thereof.

As the current collector, one selected from the group consisting of copper foil, nickel foil, stainless steel foil, titanium foil, nickel foam, copper foam, a conductive metal-coated polymer substrate, and a combination thereof may be used.

The negative electrode is formed by mixing a negative active material, a binder and optionally a conductive material in a solvent to prepare an active material composition, and applying the active material composition to a current collector. Water can be used as the solvent.

Since such a negative electrode formation method is widely known in the art, a detailed description will be omitted in this specification.

The electrolyte includes a non-aqueous organic solvent and a lithium salt.

The non-aqueous organic solvent serves as a medium through which ions involved in the electrochemical reaction of the battery can move.

As the non-aqueous organic solvent, carbonate-based, ester-based, ether-based, ketone-based, alcohol-based, or aprotic solvents may be used.

The carbonate-based solvent includes dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), etc. may be used. The ester solvent includes methyl acetate, ethyl acetate, n-propyl acetate, dimethyl acetate, methyl propionate, ethyl propionate, propyl propionate, decanolide, mevalonolactone, caprolactone and the like can be used. As the ether-based solvent, dibutyl ether, tetraglyme, diglyme, dimethoxyethane, 2-methyltetrahydrofuran, tetrahydrofuran, and the like may be used. In addition, as the ketone-based solvent, cyclohexanone or the like may be used. In addition, ethanol, isopropyl alcohol, etc. may be used as the alcohol-based solvent, and as the aprotic solvent, nitriles such as R-CN (R is a hydrocarbon group having a carbon atom of 2 to 20 in a linear, branched, or ring structure, including double bonding, aromatic ring or ether linkage), amides such as dimethylformamide, dioxolanes such as 1,3-dioxolane, sulfolanes, etc. may be used.

The non-aqueous organic solvent may be used alone or in combination with one or more of them. When using one or more mixtures, the mixing ratio can be appropriately adjusted according to the desired battery performance, which can be widely understood by those skilled in the art.

In addition, in the case of the carbonate-based solvent, it is good to use a mixture of cyclic carbonate and chain carbonate. In this case, the performance of the electrolyte solution can be excellent when cyclic carbonate and chain carbonate are mixed in a volume ratio of 1:1 to 1:9.

When the non-aqueous organic solvent is mixed and used, a mixed solvent of cyclic carbonate and chain

carbonate, a mixed solvent of cyclic carbonate and propionate solvent or a mixed solvent of cyclic carbonate, chain carbonate and propionate solvent can be used. As the propionate-based solvent, methyl propionate, ethyl propionate, propyl propionate or a combination thereof may be used.

At this time, when mixing cyclic carbonate and chain carbonate or cyclic carbonate and propionate-based solvent, mixing at a volume ratio of 1: 1 to 1: 9 can show excellent performance of the electrolyte solution. In addition, when cyclic carbonate, chain carbonate and propionate-based solvent are mixed and used, they can be mixed in a volume ratio of 1:1:1 to 3:3:4. Of course, the mixing ratio of the solvents may be appropriately adjusted according to desired properties.

The non-aqueous organic solvent may further include an aromatic hydrocarbon-based organic solvent in addition to the carbonate-based solvent. At this time, the carbonate-based solvent and the aromatic group hydrocarbon-based organic solvent may be mixed in a volume ratio of 1:1 to 30:1.

As the aromatic group hydrocarbon-based organic solvent, an aromatic group hydrocarbon-based compound of Chemical Formula 2 below may be used.

[Chemical Formula 2]

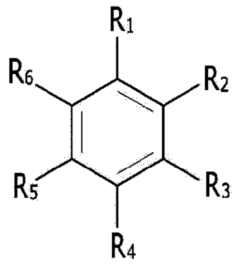

(In the Chemical Formula 2, $R_1$ to $R_6$ are the same as or different from each other and are selected from the group consisting of hydrogen, halogen, an alkyl group having 1 to 10 carbon atoms, a haloalkyl group, and a combination thereof.)

Specific examples of the aromatic group hydrocarbon hydrogen-based organic solvent include benzene, fluorobenzene, 1,2-difluorobenzene, 1,3-difluorobenzene, 1,4-difluorobenzene, 1,2,3-Trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene , 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate or an ethylene carbonate-based compound of Chemical Formula 3 as a cycle-life improving additive to improve battery cycle-life.

[Chemical Formula 3]

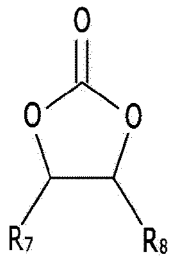

(In the Chemical Formula 3, $R_7$ and $R_8$ are the same as or different from each other and are selected from the group consisting of hydrogen, halogen group, cyano group (CN), nitro group ($NO_2$) and fluorinated alkyl group having 1 to 5 carbon atoms, and at least one of the $R_7$ and $R_8$ is selected from the group consisting of a halogen group, a cyano group (CN), a nitro group ($NO_2$) and a fluorinated alkyl group having 1 to 5 carbon atoms, and both $R_7$ and $R_8$ are not hydrogen.)

Representative examples of the ethylene carbonate compound include difluoroethylene carbonate, chloroethylene carbonate, dichloroethylene carbonate, bromoethylene carbonate, dibromoethylene carbonate, nitroethylene carbonate, cyanoethylene carbonate or fluoroethylene carbonate. In the case of further use of these cycle-life improving additives, the amount thereof may be appropriately adjusted.

The electrolyte may further include vinyl ethylene carbonate, propane sultone, succinonitrile or a combination thereof, and the amount used may be appropriately adjusted.

The lithium salt is a material that dissolves in an organic solvent and acts as a supply source of lithium ion in the battery to enable basic operation of the lithium secondary battery and promotes the movement of lithium ion between the positive electrode and the negative electrode. Representative examples of these lithium salts can contain one or more than one as a supporting electrolytic salt, which are selected from the group consisting of $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $LiC_4F_9SO_3$, $LiClO_4$, $LiAlO_2$, $LiAlCl_4$, $LiN(C_xF_{2x+1}SO_2)(C_yF_{2y+1}O_2)$ (where, x and y are natural numbers, for example, integers from 1 to 20), LiCl, LiI and $LiB(C_2O_4)_2$ (lithium bis(oxalato) borate: LiBOB). It is recommended to use the concentration of lithium salt within the range of 0.1M to 2.0M. When the concentration of lithium salt is included in the range, excellent electrolyte performance can be shown because the electrolyte has appropriate conductivity and viscosity, and lithium ion can move effectively.

Depending on the type of lithium secondary battery, a separator may exist between the positive electrode and the negative electrode. As such a separator, polyethylene, polypropylene, polyvinylidene fluoride or a multilayer of two or more of these may be used, and polyethylene/polypropylene 2-layer separator, polyethylene/polypropylene/polyethylene 3-layer separator, polypropylene/polyethylene/polypropylene 3-layer separator can be used.

Lithium secondary batteries can be classified into lithium ion batteries, lithium ion polymer batteries and lithium polymer batteries according to the type of separator and electrolyte used. Depending on the shape, it can be classified into cylindrical, prismatic, coin-type, pouch-type, etc., and can be divided into bulk type and thin film type according to size. Since the structures and manufacturing methods of these batteries are well known in this field, detailed descriptions are omitted.

## DETAILED DESCRIPTION OF THE EMBODIMENTS

Hereinafter, an exemplary embodiment will be described in detail. However, this is presented as an example, and the present invention is not limited thereby, and the present invention is only defined by the scope of the claims to be described later.

### Example embodiment 1 - Adding 0.005 mol of doping element during co-precipitation

#### (1) Manufacture of positive electrode active material precursor

An aqueous metal salt solution was prepared by dissolving $NiSO_4{\cdot}6H_2O$ as a nickel raw material, $CoSO_4{\cdot}7H_2O$ as a cobalt raw material, $MnSO_4{\cdot}H_2O$ as a manganese raw material, and $Al_2(SO_4)_3{\cdot}14\text{-}18H_2O$ as an aluminum raw material in distilled water.

The metal salt aqueous solution is purged with $N_2$ using a co-precipitation reaction device, and $NH_4(OH)$ is added as a chelating agent to the co-precipitation reaction device while the temperature of the reaction device is maintained at 50°C. A co-precipitation process was performed using NaOH for pH control.

The precipitate obtained according to the co-precipitation process was filtered, washed with distilled water, and dried in an oven at 100 °C for 24 hours to obtain $(Ni_{0.795}Co_{0.10}Mn_{0.10}Al_{0.005})(OH)_2$, precursor of positive electrode active material with an average particle diameter of 14.8 μm.

#### (2) Manufacture of positive electrode active material

A mixture was prepared by uniformly mixing the $(Ni_{0.795}Co_{0.10}Mn_{0.10}Al_{0.005})(OH)_2$ positive electrode active material precursor and $LiOH{\cdot}H_2O$ (Samchun Chemical, battery grade) at a molar ratio of 1:1.03. The mixture was loaded into a tube furnace and sintered while oxygen was inflowed at 200 mL/min. This sintering process was carried out by first heat treatment at 480 °C for 5 hours, followed by raising the temperature to 760 °C at a temperature raising speed of 2.5 °C/min, and maintaining at this temperature for 12 hours.

The obtained baked product is subjected to a water washing step. The prepared positive electrode active material had an average particle diameter D50 of 15 μm and an entire composition of $Li_{1.03}Ni_{0.795}Co_{0.10}Mn_{0.10}Al_{0.005}O_2$.

**Comparative Example 1 - Fabrication of undoped positive electrode active material**

**(1) Manufacture of positive electrode active material precursor**

An aqueous metal salt solution was prepared by dissolving $NiSO_4 \cdot 6H_2O$ as a nickel raw material, $CoSO_4 \cdot 7H_2O$ as a cobalt raw material, and $MnSO_4 \cdot H_2O$ as a manganese raw material in distilled water.

The metal salt aqueous solution is purged with $N_2$ using a co-precipitation reaction device, and $NH_4(OH)$ is added as a chelating agent to the co-precipitation reaction device while the temperature of the reaction device is maintained at 50°C. A co-precipitation process was performed using NaOH for pH control. This co-precipitation process was carried out under the condition of pH 11 to 12.

The precipitate obtained according to the co-precipitation process was filtered, washed with distilled water, and dried in an oven at 100 °C for 24 hours to obtain $(Ni_{0.8}Co_{0.1}Mn_{0.1})(OH)_2$, precursor of positive electrode active material with an average particle diameter of 14.8 μm.

**(2) Manufacture of positive electrode active material**

A mixture was prepared by uniformly mixing the $(Ni_{0.8}Co_{0.1}Mn_{0.1})(OH)_2$ positive electrode active material precursor and $LiOH \cdot H_2O$ (Samchun Chemical, battery grade) at a molar ratio of 1:1.03. The mixture was loaded into a tube furnace and sintered while oxygen was inflowed at 200 mL/min. This sintering process was carried out by first heat treatment at 480 °C for 5 hours, followed by raising the temperature to 760 °C at a temperature raising speed of 2.5 °C/min, and maintaining at this temperature for 12 hours.

The resulting fired product was washed with water to prepare a positive electrode active material. The prepared positive electrode active material had an average particle diameter D50 of 15 μm and an entire composition of $Li_{1.03}Ni_{0.8}Co_{0.1}Mn_{0.1}O_2$.

**Comparative Example 2 - Add 0.005 mol of doping element when mixing lithium raw materials**

**(1) Manufacture of positive electrode active material precursor**

An aqueous metal salt solution was prepared by dissolving $NiSO_4 \cdot 6H_2O$ as a nickel raw material, $CoSO_4 \cdot 7H_2O$ as a cobalt raw material, and $MnSO_4 \cdot H_2O$ as a manganese raw material in distilled water.

The metal salt aqueous solution is purged with $N_2$ using a co-precipitation reaction device, and $NH_4(OH)$ is added as a chelating agent to the co-precipitation reaction device while the temperature of the reaction device is maintained at 50°C. A co-precipitation process was performed using NaOH for pH control.

The precipitate obtained according to the co-precipitation process was filtered, washed with distilled water, and dried in an oven at 100 °C for 24 hours to obtain $(Ni_{0.8}Co_{0.1}Mn_{0.1})(OH)_2$, precursor of positive electrode active material with an average particle diameter of 14.8 μm.

**(2) Manufacture of positive electrode active material**

$(Ni_{0.8}Co_{0.1}Mn_{0.1})(OH)_2$ positive electrode active material precursor, LiOH $H_2O$ (Samchun Chemical, battery grade) and $Al(OH)_2$ (Samchun Chemical) uniformly mixed at 1:1.03:0.005 mole mixture was manufactured. The mixture was loaded into a tube furnace and sintered while oxygen was inflowed at 200 mL/min. This sintering process was carried out by first heat treatment at 480 °C for 5 hours, followed by raising the temperature to 760 °C at a temperature raising speed of 5 °C/min, and maintaining at this temperature for 12 hours.

The obtained baked product is subjected to a water washing step. The prepared positive electrode active material had an average particle diameter D50 of 15 μm and an entire composition of $Li_{1.03}Ni_{0.795}Co_{0.1}Mn_{0.1}Al_{0.005}O_2$.

**Comparative Example 3 - Add 0.01 mol of doping element when mixing lithium raw materials**

A positive electrode active material with the composition $Li_{1.03}Ni_{0.79}Co_{0.1}Mn_{0.1}Al_{0.01}O_2$ was prepared in the same manner as in the Comparative Example 2 except a uniform mixture of $(Ni_{0.8}Co_{0.1}Mn_{0.1})(OH)_2$ positive electrode active material precursor, LiOH $H_2O$ (Samchun Chemical, battery grade) and $Al(OH)_2$ (Samchun Chemical) in a 1:1.03:0.010 mole ratio.

**Comparative Example 4 - Add 0.02 mol of doping element when mixing lithium raw materials**

A positive electrode active material with the composition $Li_{1.03}Ni_{0.78}Co_{0.1}Mn_{0.1}Al_{0.02}O_2$ was prepared in the

same manner as in the Comparative Example 2 except a uniform mixture of $(Ni_{0.8}Co_{0.1}Mn_{0.1})(OH)_2$ positive electrode active material precursor, LiOH $H_2O$ (Samchun Chemical, battery grade) and $Al(OH)_2$ (Samchun Chemical) in a 1:1.03:0.020 mole ratio.

**Example embodiment 2** - **Adding 0.01 mol of doping element during co-precipitation**

**(1) Manufacture of positive electrode active material precursor**

A positive electrode active material precursor was prepared by the same method of (1) of exemplary embodiment 1, except that the mixing amount of the nickel raw material and the doping raw material is adjusted so that the entire particle composition of the prepared positive electrode active material precursor becomes $(Ni_{0.79}Co_{0.1}Mn_{0}.Al_{0.01})(OH)_2$.

**(2) Manufacture of positive electrode active material**

Using the $(Ni_{0.79}Co_{0.1}Mn_{0}.Al_{0.01})(OH)_2$ positive electrode active material precursor, the positive electrode active material of the composition $Li_{1.03}Ni_{0.79}Co_{0.1}Mn_{0.1}Al_{0.01}O_2$ was obtained by the same method as (2) of Example Embodiment 1.

**Example embodiment 3** - **Adding 0.02 mol of doping element during co-precipitation**

**(1) Manufacture of positive electrode active material precursor**

A positive electrode active material precursor was prepared by the same method of (1) of exemplary embodiment 1, except that the mixing amount of the nickel raw material and the doping raw material is adjusted so that the entire particle composition of the prepared positive electrode active material precursor becomes $(Ni_{0.78}Co_{0.1}Mn_{0.1}Al_{0.02})(OH)_2$.

**(2) Manufacture of positive electrode active material**

Using the $(Ni_{0.78}Co_{0.1}Mn_{0.1}Al_{0.02})(OH)_2$ positive electrode active material precursor, a positive electrode active material of $Li_{1.03}(Ni_{0.78}Co_{0.1}Mn_{0.1}Al_{0.02})O_2$ composition was obtained by the same method as (2) of Example 1.

**Comparative Example 5** - **Fabrication of undoped positive electrode active material**

**(1) Manufacture of positive electrode active material precursor**

A positive electrode active material precursor was prepared by the same method as Comparative Example 1, except that the positive electrode active material precursor of the composition $(Ni_{0.92}Co_{0.04}Mn_{0.04})(OH)_2$ was prepared by adjusting the mixing ratio of nickel raw material, cobalt raw material and manganese raw material.

**(2) Manufacture of positive electrode active material**

Using the positive electrode active material precursor of the (1), a positive electrode active material having an entire composition of $Li_{1.03}Ni_{0.92}Co_{0.04}Mn_{0.04}O_2$ was prepared by the same method as (2) of Comparative Example 1.

**Comparative Example 6** - **Add 0.005 mol of doping element when mixing lithium raw materials**

**(1) Manufacture of positive electrode active material precursor**

A positive electrode active material precursor having a composition of $(Ni_{0.92}Co_{0.04}Mn_{0.04})(OH)_2$ was prepared by the same method as (1) of Comparative Example 5.

**(2) Manufacture of positive electrode active material**

A positive electrode active material with a composition of $Li_{1.03}Ni_{0.915}Co_{0.04}Mn_{0.04}Al_{0.005}O_2$ was prepared by the same method as (2) of Comparative Example 2, except that the positive electrode active material precursor of (1) was used and 0.005 mol of $Al(OH)_3$ (Samchun Chemical) was mixed.

**Example embodiment 4 - Adding 0.005 mol of doping element during co-precipitation**

**(1) Manufacture of positive electrode active material precursor**

A positive electrode active material precursor was prepared by the same method as (1) of Exemplary embodiment 1 except that the mixing amount of nickel, cobalt and manganese raw material and doping raw material is adjusted so that the entire particle composition of the prepared positive electrode active material precursor is $(Ni_{0.915}Co_{0.04}Mn_{0.04}Al_{0.005})(OH)_2$

**(2) Manufacture of positive electrode active material**

Using the $(Ni_{0.915}Co_{0.04}Mn_{0.04}Al_{0.005})(OH)_2$ positive electrode active material precursor, a positive electrode active material of the composition $Li_{1.03}Ni_{0.915}Co_{0.04}Mn_{0.04}Al_{0.005}O_2$ was obtained by the same method as (2) of Example Embodiment 1.

**Example embodiment 5 - Adding 0.01 mol of doping element during co-precipitation**

**(1) Manufacture of positive electrode active material precursor**

A positive electrode active material precursor was prepared by the same method as (1) of Exemplary embodiment 1 except that the mixing amount of nickel, cobalt and manganese raw material and doping raw material is adjusted so that the entire particle composition of the manufactured positive electrode active material precursor becomes $(Ni_{0.91}Co_{0.04}Mn_{0.04}Al_{0.01})(OH)_2$.

**(2) Manufacture of positive electrode active material**

Using the $(Ni_{0.91}Co_{0.04}Mn_{0.04}Al_{0.01})(OH)_2$ positive electrode active material precursor, a positive electrode active material of the composition $Li_{1.03}Ni_{0.91}Co_{0.04}Mn_{0.04}Al_{0.01}O_2$ was obtained by the same method as (2) of Example Embodiment 1.

**Comparative Example 7 - Fabrication of undoped positive electrode active material**

**(1) Manufacture of positive electrode active material precursor**

A positive electrode active material precursor was prepared by the same method as Comparative Example 1 except that the positive electrode active material precursor of the composition $(Ni_{0.96}Co_{0.04})(OH)_2$ was prepared by adjusting the mixing ratio of the nickel raw material and the cobalt raw material, except for the manganese raw material.

**(2) Manufacture of positive electrode active material**

Using the $(Ni_{0.96}Co_{0.04})(OH)_2$ positive electrode active material precursor, a positive electrode active material with the entire composition of $LiNi_{0.96}Co_{0.04}O_2$ was prepared by the same method as (2) of Comparative Example 1.

**Comparative Example 8 - Add 0.005 mol of doping element when mixing lithium raw materials**

**(1) Manufacture of positive electrode active material precursor**

A positive electrode active material precursor having a composition of $(Ni_{0.96}Co_{0.04})(OH)_2$ was prepared by the same method as (1) of Comparative Example 7.

**(2) Manufacture of positive electrode active material**

A positive electrode active material with a composition of $Li_{1.03}$ $Ni_{0.955}Co_{0.04}Al_{0.005}O_2$ was prepared by the same method as (2) of Comparative Example 2, except that the $(Ni_{0.96}Co_{0.04})(OH)_2$ positive electrode active material precursor was used and 0.005 mole of $Al(OH)_3$ (Samchun Chemical) was mixed.

**Example embodiment 6 - Adding 0.005 mol of doping element during co-precipitation**

**(1) Manufacture of positive electrode active material precursor**

A positive electrode active material precursor was prepared by the same method as (1) of embodiment 1 except that excluding the manganese raw material so that the entire particle composition of the manufactured positive electrode active material precursor is $(Ni_{0.955}Co_{0.04}Al_{0.005})(OH)_2$, and the mixing amount of nickel raw material and cobalt raw material is adjusted.

**(2) Manufacture of positive electrode active material**

A positive electrode active material having a composition of $Li_{1.03}Ni_{0.955}Co_{0.04}Al_{0.005}O_2$ was prepared by the same method as (2) of Example Embodiment 1 using the $(Ni_{0.955}Co_{0.04}Al_{0.005})(OH)_2$ positive electrode active material precursor.

**Example embodiment 7 - Adding 0.01 mol of doping element during co-precipitation**

A positive electrode active material precursor was prepared by the same method as (1) of embodiment 1 except that excluding the manganese raw material so that the entire particle composition of the manufactured positive electrode active material precursor is $(Ni_{0.95}Co_{0.04}Al_{0.01})(OH)_2$, for adjusting the mixing amount of nickel raw material and cobalt raw material,

**(2) Manufacture of positive electrode active material**

A positive electrode active material having a composition of $Li_{1.03}Ni_{0.95}Co_{0.04}Al_{0.01}O_2$ was prepared by the same method as (2) of exemplary embodiment 1 using the $(Ni_{0.95}Co_{0.04}Al_{0.01})(OH)_2$ positive electrode active material precursor.

**Comparative Example 9 - Al doping of LCO during co-precipitation**

A positive electrode active material precursor was prepared by the method as (1) of Example 1, except that the mixing amount of the nickel raw material and the cobalt raw material is adjusted so that the entire particle composition of the prepared positive electrode active material precursor is $Co(OH)_2$.

**(2) Manufacture of positive electrode active material**

A positive electrode active material having a composition of $Li_{1.03}Co_{0.99}Al_{0.01}O_2$ was prepared by the same method as (2) of Example Embodiment 1 using the positive electrode active material precursor of the $Co(OH)_2$. The prepared positive electrode active material had an average particle diameter D50 of 8 $\mu$m.

**Comparative Example 10 - Al doping by adjusting pH after NC reaction**

$NiSO_4 \cdot 6H_2O$ was used as the nickel raw material, and $CoSO_4 \cdot 7H_2O$ was used as the cobalt raw material. These raw materials were dissolved in distilled water to prepare a first metal salt aqueous solution.

In addition, as an aluminum raw material, $Al_2(SO_4)_3 \cdot 14\text{-}18H_2O$ was dissolved in distilled water to prepare a second metal salt aqueous solution.

Next, after preparing the co-precipitation reactor, $N_2$ was purged to prevent oxidation of metal ions during the co-precipitation reaction, and the temperature of the reactor was maintained at 50°C.

The first metal salt aqueous solution was prepared in a co-precipitation reaction unit purged with $N_2$, and $NH_4(OH)$ was added as a chelating agent to the co-precipitation reaction unit while maintaining the temperature of the reaction unit at 50°C. NaOH was added for pH control, and a co-precipitation process was performed under a pH condition of 11 to 12 to prepare $(Ni_{0.96}Co_{0.04})(OH)_2$. $(Ni_{0.92}Co_{0.04}Al_{0.04})(OH)_2$ was prepared by performing a co-precipitation process using the second metal salt aqueous solution under the condition of pH 9.0 to 10.0.

The obtained precipitate was filtered, washed with distilled water, and dried in an oven at 100°C for 24 hours to prepare a positive electrode active material precursor having a composition of $(Ni_{0.92}Co_{0.04}Al_{0.04})(OH)_2$.

**(2) Manufacture of positive electrode active material**

A positive electrode active material having a composition of $Li_{1.03}Ni_{0.92}Co_{0.04}Al_{0.04}O$ was prepared by the same method as (2) of Example Embodiment 1 using the $(Ni_{0.92}Co_{0.04}Al_{0.04})(OH)_2$ positive electrode active material precursor. The average particle diameter D50 of the prepared positive electrode active material was 14 μm.

**(Experimental Example 1) X-ray diffraction evaluation**

The lattice constant of the positive electrode active material prepared according to the exemplary embodiment 1 to 7 and Comparative Example 1 to 8 was obtained by X-ray diffraction measurement using CuKα rays. The measured a-axis length and c-axis length are shown in Table 1 below. In addition, the distance ratio (c/a axis ratio) between crystal axes is shown in Table 1 below.

In addition, the crystal grain size of the active material was measured and shown in Table 1 below.

Next, for positive electrode active material, was tested by X-ray diffraction measurement under the condition of using CuKα line as target line, X'Pert powder (PANalytical company) XRD equipment, measurement condition being 2θ= 10° to 130°, scan speed (°/S)=0.328, and step size 0.026°/step. The intensity (peak area) of the 003 and 104 planes was obtained. I(003)/I(104) was obtained from this result, and the result is shown in Table 1 below.

For crystallographic consideration by doping, Rietveld analysis was performed using high score plus Rietveld software, and the results are shown in Table 1 as R-factors.

XRD measurement for Rietveld analysis uses X'Pert powder (PANalytical) XRD equipment with CuKα line as the target line, measurement condition is 2θ = 10° to 130°, scan speed (°/S) = 0.328, and the step size was 0.026°/step. The strength of the (006) plane, (102) plane and (101) plane was obtained, and the R-factor was obtained from this result according to Equation 1 below, and the result is shown in Table 1 below.

From this result, as the GOF (Goodness of Fit) value is calculated within 1.2, it can be said that the Rietveld structural analysis result is a reliable value.

[Equation 1]

$$\text{R-factor}=\{I\ 006+I\ 102\}/I\ 101$$

The tap density was measured using a tap density meter (JEL STAV II (J. Engelsmann AG)). Specifically, the density was measured by tapping 100 g of the positive electrode active material 3,000 times using a 100 ml measuring cylinder.

In Table 1 below, M means $Ni_xCo_yMn_z$.

(Table 1)

| | | a(Å) | c(Å) | c/a | grain size (nm) | I 003/I 104 | R-factor | GOF |
|---|---|---|---|---|---|---|---|---|
| Comparative Example 1 | Li $(M)O_2$ (Ni=0.80) | 2.8741 | 14.1985 | 4.9401 | 113.9 | 1.24 | 0.526 | 1.149 |
| Comparative Example 2 | Li $(M)_{0.995}Al_{0.005}O_2$ | 2.8740 | 14.1980 | 4.9401 | 98.5 | 1.26 | 0.515 | 1.148 |
| Comparative Example 3 | Li $(M)_{0.995}Al_{0.01}O_2$ | 2.8745 | 14.1986 | 4.9395 | 94.3 | 1.22 | 0.521 | 1.146 |
| Comparative Example 4 | Li $(M)_{0.995}Al_{0.015}O_2$ | 2.8735 | 14.1989 | 4.9413 | 85.4 | 1.23 | 0.520 | 1.152 |
| exemplary embodiment 1 | Li $(M)_{0.995}Al_{0.005}O_2$ | 2.8745 | 14.2009 | 4.9403 | 102.7 | 1.22 | 0.521 | 1.142 |
| exemplary embodiment 2 | Li $(M)_{0.995}Al_{0.01}O_2$ | 2.8742 | 14.2055 | 4.9424 | 95.6 | 1.23 | 0.519 | 1.146 |
| exemplary embodiment 3 | Li $(M)_{0.995}Al_{0.02}O_2$ | 2.8740 | 14.2054 | 4.9427 | 86.3 | 1.24 | 0.511 | 1.151 |

(continued)

| | | a(Å) | c(Å) | c/a | grain size (nm) | I 003/I 104 | R-factor | GOF |
|---|---|---|---|---|---|---|---|---|
| Comparative Example 5 | Li $(M)O_2$(Ni=0.92) | 2.8745 | 14.1966 | 4.9388 | 94.3 | 1.22 | 0.528 | 1.158 |
| Comparative Example 6 | Li $(M)_{0.995}Al_{0.005}O_2$ | 2.8745 | 14.2029 | 4.9409 | 89.7 | 1.22 | 0.519 | 1.150 |
| exemplary embodiment 4 | Li $(M)_{0.995}Al_{0.005}O_2$ | 2.8740 | 14.2067 | 4.9431 | 90.0 | 1.22 | 0.521 | 1.149 |
| exemplary embodiment 5 | Li $(M)_{0.99}Al_{0.01}O_2$ | 2.8739 | 14.2107 | 4.9447 | 84.3 | 1.21 | 0.520 | 1.151 |
| Comparative Example 7 | Li $(M)O_2$(Ni=0.96) | 2.8735 | 14.2009 | 4.9420 | 85.3 | 1.23 | 0.520 | 1.138 |
| Comparative Example 8 | Li $(M)_{0.995}Al_{0.005}O_2$ | 2.8744 | 14.2015 | 4.9406 | 78.6 | 1.24 | 0.515 | 1.145 |
| exemplary embodiment 6 | Li $(M)_{0.995}Al_{0.005}O_2$ | 2.8739 | 14.2098 | 4.9444 | 80.6 | 1.22 | 0.512 | 1.151 |
| exemplary embodiment 7 | Li $(M)_{0.99}Al_{0.01}O_2$ | 2.8750 | 14.2091 | 4.9422 | 65.3 | 1.22 | 0.514 | 1.146 |

Referring to Table 1, it can be seen that the factor values representing the crystal structure analyzed by XRD are changed according to the input time and doping amount of the doping element. Particularly, it can be seen that the crystal grain size changes greatly even under the same sintering condition according to the Al doping amount. On the other hand, it was found that when Al was doped, the values of a and c decreased slightly. Therefore, in the case of Al doping, it is predicted that Al is doped at the Ni site in the nickel-cobalt-manganese positive electrode active material to properly play a role in improving structural stability. Accordingly, the initial efficiency and electrochemical properties can be improved overall.

In addition, even if doped with the same doping amount, in the case of manufacturing a positive electrode active material after manufacturing an Al-doped precursor by injecting Al raw material together with nickel, cobalt, and manganese raw material during co-precipitation, both the crystal grain size and R-factor were decreased, comparing the case of manufacturing the positive electrode active material by mixing the Al raw material together with the lithium raw material after preparing the precursor. That is, during co-precipitation, it can be confirmed once again that manufacturing a positive electrode active material after manufacturing a doped precursor by injecting Al raw material, which is a doping raw material, has a positive effect on the performance of the positive electrode active material.

On the other hand, I(003)/I(104) values, which are cation mixing indexes, did not significantly decrease. Particularly, compared to the case of manufacturing the positive electrode active material by mixing the doping raw material with the lithium raw material in a powder state after manufacturing the precursor, in this case of manufacturing the positive electrode active material after manufacturing the precursor by injecting the Al raw material during co-precipitation, it can be confirmed that the change in c value is large and the change in grain size is small. From this result, it is expected that the electrochemical characteristic will be improved when the positive electrode active material is manufactured according to the exemplary embodiment, and it can be predicted that the DSC peak temperature will be greatly improved due to the improved thermal stability.

**(Experimental Example 2) Evaluation of electrochemical performance (1) coin-type half-cell fabrication**

A coin-type half-cell was fabricated using the positive electrode active material prepared according to Exemplary Embodiments 1 to 7 and Comparative Examples 1 to 10.

Specifically, positive electrode active material, Denka black conductive material, and polyvinylidene fluoride binder (trade name: KF1100) were mixed at a weight ratio of 96.5:1.5:2, and the mixture was mixed so that the solid content was about 30 wt% with N-Methyl-2-pyrrolidone solvent added to prepare a positive electrode active material slurry.

The slurry was coated on aluminum foil (Al foil, thickness: 15 μm), which is a positive electrode current collector, using a doctor blade, dried, and then rolled to prepare a positive electrode. The loading amount of the positive electrode

was about 14.8 mg/cm$^2$, and the rolling density was about 3.2 g/cm$^3$.

A 2032 coin-type half-cell was fabricated by a conventional method using the positive electrode, lithium metal negative electrode (200μm, Honzo metal), electrolyte solution and polypropylene separator. For the electrolyte solution, a mixed solution was used by dissolving 1M $LiPF_6$ in a mixed solvent of ethylene carbonate (EC) and dimethyl carbonate (DEC) (mixing ratio EC:DMC=1:1 volume ratio).

**(2) Evaluation of capacity**

After aging the coin-type half cell at room temperature (25 °C) for 10 hours, a charge and discharge test was performed.

The capacity evaluation was based on 200mAh/g, and the charge and discharge conditions were CC/CV 2.5V to 4.25V, 1/20C cut-off condition, after charging and discharging on condition of 0.1C charge / 0.1C discharge, 0.2C charge / 0.2C discharge, the initial capacity was measured.

The room temperature cycle characteristic is measured at room temperature 25°C, and the high temperature cycle characteristic is measured at high temperature 45°C. It is measured that after measuring 30 times under 0.3C charging/0.3C discharge condition, and then the ratio of the 30th discharge capacity to the first discharge capacity is calculated.

The results for this are shown in Table 2, Table 3 and Table 4 below.

**(3) resistance characteristic measurement**

The high-temperature initial resistance (DC-IR (Direct current internal resistance)) of the cell was measured at 45 °C under constant current-constant voltage 2.5V to 4.25V, 1/20C cut-off condition, 0.2C charge and 0.2C discharge was performed once, and the voltage value 60 seconds after applying the discharge current at 4.25V charging 100% was measured, and the results are shown in Table 2, Table 3 and Table 4 below.

The resistance increase rate is measured in the same way as the initial resistance measurement method after 30 cycle compared to the resistance initially measured at high temperature (45°C (high temperature initial resistance), and the increase rate is converted into percentage (%), and then the results are shown in Table 2, Table 3 and Table 4 below.

Average leakage current measures the current generation for 120 hours when the half cell is maintained at 4.7V at a high temperature of 55°C, calculates the average value, and the result is shown in Table 2, Table 3 and Table 4.

**(4) Thermal stability evaluation**

In the differential scanning calorimetry (DSC) analysis, after charging the half cell from the initial 0.1C charging condition to 4.25V, the half cell is disassembled to obtain only the positive electrode separately, and the positive electrode is washed 5 times with dimethyl carbonate. After impregnation of the positive electrode washed in the crucible for DSC with electrolyte solution, while raising the temperature to 265 °C, the DSC peak temperature and calorific value result obtained by measuring the caloric change using Mettler Toledo's DSC1 star system as a DSC device. It is shown in Table 2, Table 3 and Table 4 below. DSC peak temperature represents the temperature at which an exothermic peak appeared.

(Table 2)

| | Discharge capacity (mAh/g) | Initial efficiency (%) | room temperature cycle (%) | High temp. cycle (%) | room temp. initial resistance (Ω) | Ratio of increasing resistance (%) | Average leak current(mA) | DSC peak temperature (°C) |
|---|---|---|---|---|---|---|---|---|
| Comparative Example 1 | 210.1 | 93.8 | 96.5 | 92.8 | 23.4 | 113.7 | 0.51 | 225.2 |
| Comparative Example 2 | 208.5 | 93.9 | 96.6 | 93.3 | 23.1 | 96.8 | 0.45 | 228.5 |
| Comparative Example 3 | 205.6 | 94.0 | 96.9 | 94.1 | 22.2 | 88.2 | 0.43 | 230.9 |
| Comparative Example 4 | 202.8 | 93.8 | 98.1 | 96.3 | 22.6 | 64.2 | 0.38 | 234.5 |
| Comparative Example 9 | 160.1 | 95.1 | 97.2 | 95.2 | 15.8 | 61.2 | 0.42 | 275.1 |
| Comparative Example 10 | 208.7 | 93.8 | 96.9 | 94.1 | 26.1 | 98.1 | 0.55 | 218.6 |
| exemplary embodiment 1 | 210.8 | 94.0 | 96.8 | 93.6 | 22.5 | 65.8 | 0.48 | 227.9 |
| exemplary embodiment 2 | 209.7 | 94.1 | 97.8 | 95.2 | 21.1 | 46.8 | 0.25 | 231.5 |
| exemplary embodiment 3 | 205.1 | 93.9 | 99.5 | 97.2 | 21.5 | 35.7 | 0.15 | 236.7 |

Table 2 is a result of measuring the electrochemical characteristics of the positive electrode active materials of Comparative Examples 1 to 4 and Example Embodiments 1 to 3 in which the Al doping amount was changed based on Ni 0.80 mol, Co 0.10 mol, and Mn 0.10 mol. In addition, for comparison, the result of measuring the electrochemical characteristics of after preparing an Al-doped LCO precursor by adding Al during co-precipitation, Comparative Example 9, in which the positive electrode active material was prepared after preparing the aluminum doped precursor and after nickel and cobalt reaction in which a positive electrode active material was prepared, adjusting the pH range and injecting an aluminum doping raw material, Comparative Example 10, also shows in Table 2. Referring to Table 2, in the case of Comparative Example 1, which is not doped with any metal element, the discharge capacity is 210.1mAh/g, and the room temperature and high temperature cycle-life are 96% and 93%, respectively, but the resistance increase rate is 113%. and average leakage current of 0.51mA, which is very high. The DSC peak temperature, which represents a particularly heat safety indicator, is 225.2°C, which confirms that the heat safety is very low.

In the case of Comparative Example 2 to 4, in which the doped positive electrode active material was manufactured by mixing Al with lithium raw material after precursor production, the structure was somewhat stabilized, and average leakage current and DSC were slightly improved compared to Comparative Example 1, room temperature and high temperature cycle characteristics were improved, but the capacity was greatly reduced.

In addition, in the case of Comparative Example 9, which is a LCO positive electrode material doped with Al, the resistance characteristics were slightly improved, and the thermal stability and cycle-life characteristics were also slightly improved, but the capacity was remarkably low.

In addition, in the case of Comparative Example 10, it can be seen that the initial resistance and resistance increase rate are very high, the initial efficiency and thermal stability are deteriorated, and the room temperature and high-temperature cycle-life characteristics and capacity characteristics are all deteriorated.

On the other hand, in the case of exemplary embodiments 1 to 3 in which a doped precursor was prepared by injecting Al raw material together in the co-precipitation process for manufacturing a precursor and then a positive electrode active material was manufactured, it can be confirmed that the room temperature and high temperature cycle life characteristic, high temperature initial resistance, resistance increase rate and average leakage current characteristic are significantly improved with good capacity. Particularly, since the DSC peak temperature is also very high, it can be confirmed that the structural stability is secured.

Considering these results, it can be confirmed that when the positive electrode active material is produced after preparing the doped precursor by adding Al during co-precipitation, a very favorable result is obtained in the properties of the positive electrode active material.

(Table 3)

| | Discharge Cap. (mAh/g) | Initial efficiency (%) | room temp. cycle-life (%) | High temp. cycle-life (%) | room temp. initial resistance (Ω) | Ratio of increasing resistance (%) | Average leakage current (mA) | DSC peak temp. (°C) |
|---|---|---|---|---|---|---|---|---|
| Comparative Example 5 | 223.5 | 93.6 | 85.2 | 80.8 | 38.2 | 385.1 | 0.98 | 210.8 |
| Comparative Example 6 | 222.4 | 93.5 | 88.6 | 82.7 | 32.3 | 258.7 | 0.85 | 215.9 |
| exemplary embodiment4 | 222.3 | 93.9 | 95.9 | 93.9 | 27.2 | 141.8 | 0.62 | 219.7 |
| exemplary embodiment5 | 221.2 | 93.6 | 97.1 | 94.7 | 26.5 | 122.5 | 0.35 | 225.2 |

(Table 4)

| | Discharge Cap. (mAh/g) | Initial efficiency (%) | room temp. cycle-life (%) | High temp. cycle-life (%) | room temp. initial resistance (Ω) | Ratio of increasing resistance (%) | Average leakage current(mA) | DSC peak temperature(°C) |
|---|---|---|---|---|---|---|---|---|
| Comparativ e Example7 | 228.2 | 94.5 | 40.6 | 35.1 | 49.6 | 550.6 | 1.97 | 200.1 |
| Comparativ e Examples | 227.2 | 94.8 | 60.8 | 52.7 | 41.8 | 323.1 | 1.51 | 208.7 |
| exemplary embodimen t6 | 227.3 | 94.6 | 71.4 | 64.0 | 35.2 | 204.2 | 1.15 | 210.1 |
| exemplary embodimen t7 | 224.3 | 95.2 | 88.7 | 84.9 | 28.9 | 157.9 | 0.87 | 215.8 |

Table 3 is a result of measuring the electrochemical characteristics of the positive electrode active material of Comparative Example 5 to 6 and Example Embodiments 4 to 5 in which the doping amount of Al was changed based on 0.92 mol of Ni, 0.04 mol of Co, and 0.04 mol of Mn. Table 4 is the result of measuring the electrochemical characteristics of the positive electrode active material of Comparative Example 7 to 8 and Example Embodiment 6 to 7 in which the doping amount of Al was changed based on 0.96 mol of Ni and 0.04 mol of Co.

Referring to Table 3 and Table 4, it can be seen that the result shows a form similar to that of Table 2.

The positive electrode active material of Example Embodiments 4 to 7 in which Al is doped in the co-precipitation process has less capacity reduction and increased room temperature and high temperature cycle-life characteristics because Al is uniformly doped to the inside of the positive electrode active material. In addition, it can be seen that the initial resistance, resistance increase rate and average leakage current are reduced.

In addition, it was confirmed that the DSC temperature increased as the structural stability of the positive electrode active material particle increased.

Considering the result as above, in the case of manufacturing a positive electrode active material after manufacturing a doped precursor by injecting Al doped raw material in the co-precipitation step during precursor manufacturing, as in the present invention,

It can be seen that the performance of the positive electrode active material having a very high nickel content, can be dramatically improved.

**(Experimental Example 4) Cross-section analysis of positive electrode active material (FIB-EDS (Al) analysis)**

For the positive electrode active material manufactured according to Example Embodiment 3 and Comparative Example 4, cross-section was cut with FIB (Focused Ion Beam, SEIKO 3050SE), and element mapping was performed by using SEM (Scanning Electron Microscope, JEOL JSM-6610) equipment.

Specifically, in the positive electrode active material cross-section, a point with a uniform distance from the inside of the secondary particle to the surface was line scanned for the Al element. The results were in FIG. 2 and FIG. 3. That is, FIG. 2 and FIG. 3 is the result of analyzing the Al element present in the positive electrode active material prepared according to Example 3 and Comparative Example 4, respectively. The spectrum is the position indicated in the SEM picture, and the numerical value indicates the mole % of Al present at that position.

Referring to FIG. 2, in the positive electrode active material of Example 3, it can be confirmed that the concentration of Al is maintained uniformly at the particle surface and center, and it can be seen that the Al average concentration of the center and surface portion (spectrum 1-3: corresponding to about 30% of the radius) is about 1.4 mol%, and there is no difference in concentration.

Against this, as shown in FIG.3, in the positive electrode active material of Comparative Example 4, the Al concentration is higher toward the particle surface and lower toward the center of the particle, and the center and surface areas (spectrum 1-3, which is about 30% of the radius) were about 1.5 mol% and about 2.87 mol%, respectively, indicating that the difference in Al concentration between the center and surface areas was about 1.37 mol%.

In addition, as in the exemplary embodiment 3 and Comparative Example 4, Al concentrates of the surface and center of the positive electrode active material manufactured according to exemplary embodiments 1, 2 and 4 to 7 and Comparative Example 1 to 3 and 5 to 8, the results are shown in Table 5 below. For comparison, the results of exemplary embodiment 3 and Comparative Example 4 are also shown in Table 5 below.

(Table 5)

| | Al average content (mol%) | | Difference of Al concentration between center and surface portion |
|---|---|---|---|
| | Surface portion (which is about 30% of the radius) | Center portion | |
| Comparative Example 1 | 0 | 0 | 0 |
| Comparative Example 2 | 1.6 | 0.24 | 1.36 |
| Comparative Example 3 | 2.29 | 0.97 | 1.32 |
| Comparative Example 4 | 2.87 | 1.5 | 1.37 |

(continued)

| | Al average content (mol%) | | Difference of Al concentration between center and surface portion |
|---|---|---|---|
| | Surface portion (which is about 30% of the radius) | Center portion | |
| exemplary embodiment 1 | 0.45 | 0.52 | 0.07 |
| exemplary embodiment 2 | 0.87 | 0.96 | 0.09 |
| exemplary embodiment 3 | 1.4 | 1.4 | 0 |
| Comparative Example 5 | 0 | 0 | 0 |
| Comparative Example 6 | 1.72 | 0.31 | 1.41 |
| exemplary embodiment 4 | 0.36 | 0.57 | 0.21 |
| exemplary embodiment 5 | 0.97 | 0.92 | 0.05 |
| Comparative Example 7 | 0 | 0 | 0 |
| Comparative Example 8 | 1.51 | 0.18 | 1.33 |
| exemplary embodiment 6 | 0.51 | 0.48 | 0.03 |
| exemplary embodiment 7 | 0.97 | 0.89 | 0.08 |

As shown in the Table 5, in the case of exemplary embodiments 1 to 7, the Al concentration difference between the center and the surface is 0 mol% to 1 mol%, whereas in the case of Comparative Examples 2-4, 6, and 8 doped with Al, the concentration difference is 1.32 mol% to 1.41 mol%, which is very large.

The present invention is not limited to the exemplary embodiment, but can be manufactured in a variety of different forms, and a person of an ordinary skill in the technical field to which the present invention belongs does not change the technical idea or essential characteristics of the present invention. It will be appreciated that it may be embodied in other specific forms. Therefore, the exemplary embodiment described above should be understood as illustrative in all respects and not limiting.

## Claims

**1.** A positive electrode active material for a lithium secondary battery, comprising:

a lithium nickel-based compound particle having a Ni content of 75 mol% or more,
wherein, a difference in Al concentration between the center and surface of the lithium nickel-based compound particle is less than 1 mol%.

**2.** The positive electrode active material of claim 1, wherein:
an average particle diameter D50 of the lithium nickel-based compound particle is 10 $\mu$m to 20 $\mu$m.

**3.** The positive electrode active material of claim 1, wherein:
the lithium nickel-based compound particle is represented by Chemical Formula 1 below.

[Chemical Formula 1] $Li_aNi_xCo_yMn_zAl_{1-(x+y+z)}O_2$

(In the Chemical Formula 1, a is $0.95 \leq a \leq 1.15$, x is $0.75 \leq x \leq 0.98$, y is $0 < y < 0.2$, z is $0 < z < 0.2$, and $y+z \leq 0.25$)

**4.** The positive electrode active material of claim 1, wherein:
the surface portion is an area corresponding to a length of less than 30% of the lithium nickel compound particle average radius in the depth direction from the most surface of the lithium nickel compound particle.

**5.** The positive electrode active material of claim 3, wherein:
in the Chemical Formula 1, x+y+z ranges from 0.98 to 0.999.

**6.** A manufacturing method of positive electrode active material for lithium battery, comprising:

preparing a precursor compound by co-precipitation of nickel raw material, cobalt raw material, manganese raw material, and aluminum raw material in a solvent;
generating a mixture by mixing the precursor compound and lithium source material; and
sintering the mixture,
wherein, the positive electrode active material for the lithium secondary battery is a lithium nickel-based compound particle having a Ni content of 80 mol% or more, and a concentration difference of Al between the center and surface portions of the lithium nickel-based compound particle is 1 mol% or less.

**7.** The method of claim 6, wherein:
the co-precipitation step is carried out at a pH of 11.0 to 12.0.

**8.** The method of claim 6, wherein:
a Al content in the lithium nickel-based compound is 0.1 mol% to 2 mol%, based on the total metal elements except lithium in the lithium nickel-based compound particle.

**9.** The method of claim 6, wherein:
the surface portion is an area corresponding to a depth of 30% or less of the lithium nickel compound particle average radius in the depth direction from the most surface of the lithium nickel compound particle.

**10.** A lithium secondary battery, comprising:

a positive electrode comprising the positive electrode active material of any one of claims 1 to 5;
negative electrode; and
non-aqueous electrolyte.

【FIG. 1】

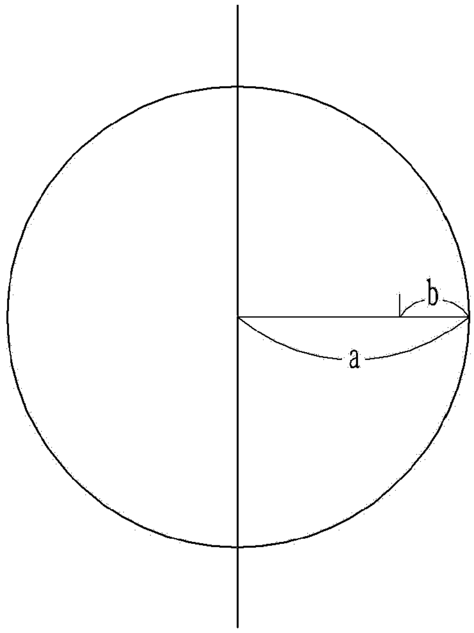


【FIG. 2】

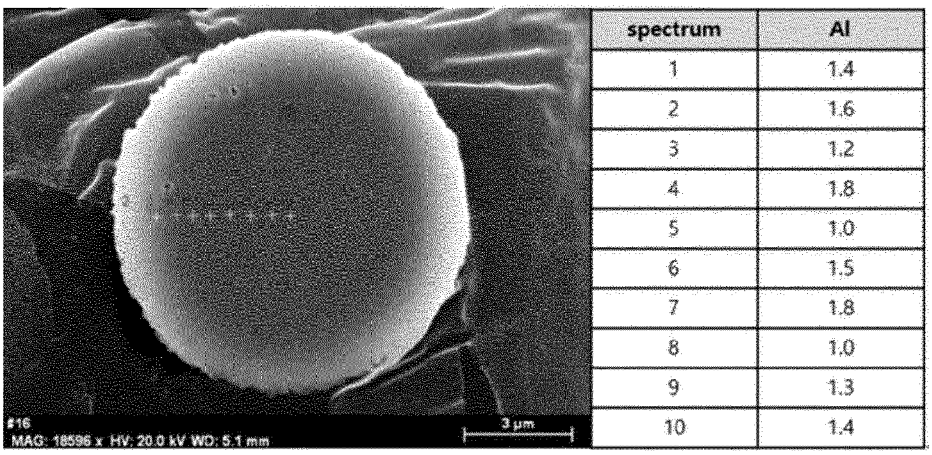


| spectrum | Al |
|---|---|
| 1 | 1.4 |
| 2 | 1.6 |
| 3 | 1.2 |
| 4 | 1.8 |
| 5 | 1.0 |
| 6 | 1.5 |
| 7 | 1.8 |
| 8 | 1.0 |
| 9 | 1.3 |
| 10 | 1.4 |

【FIG. 3】

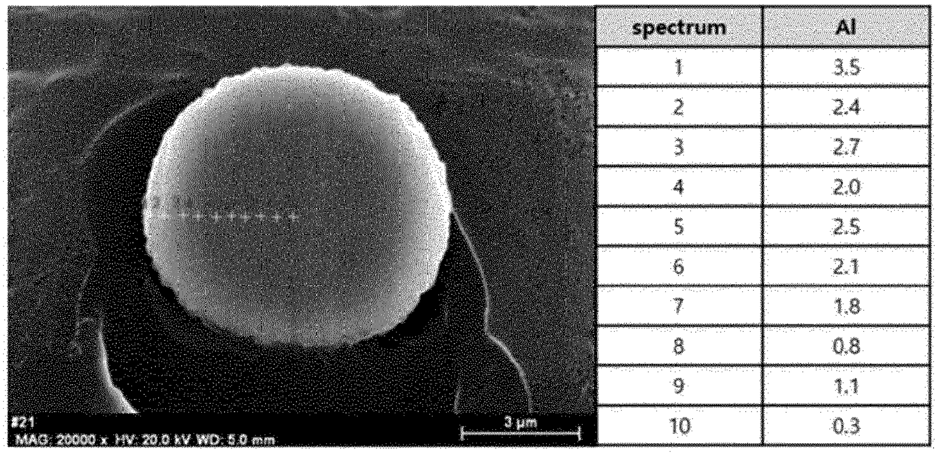


| spectrum | Al |
|---|---|
| 1 | 3.5 |
| 2 | 2.4 |
| 3 | 2.7 |
| 4 | 2.0 |
| 5 | 2.5 |
| 6 | 2.1 |
| 7 | 1.8 |
| 8 | 0.8 |
| 9 | 1.1 |
| 10 | 0.3 |

**INTERNATIONAL SEARCH REPORT**

International application No.
**PCT/KR2021/016671**

**A. CLASSIFICATION OF SUBJECT MATTER**

**H01M 4/525**(2010.01)i; **H01M 4/505**(2010.01)i; **C01G 53/00**(2006.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 4/525(2010.01); H01M 10/052(2010.01); H01M 4/04(2006.01); H01M 4/131(2010.01); H01M 4/38(2006.01); H01M 4/48(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질 (positive electrode active material), 알루미늄 (aluminum), 공침 (co-precipitate), 이차 전지 (secondary battery), 전이금속 (transition metal), 도핑 (doping)

**C. DOCUMENTS CONSIDERED TO BE RELEVANT**

| Category* | Citation of document, with indication, where appropriate, of the relevant passages | Relevant to claim No. |
|---|---|---|
| X | KR 10-1644252 B1 (SUMITOMO METAL MINING CO., LTD.) 29 July 2016 (2016-07-29)<br>See paragraphs [0060], [0144], [0161], [0179], [0253]-[0262], [0268], [0269], [0276], [0281], [0282] and [0301]-[0304]; example 6; and table 2. | 1-10 |
| X | KR 10-2019-0132633 A (SUMITOMO CHEMICAL CO., LTD. et al.) 28 November 2019 (2019-11-28)<br>See paragraphs [0045]-[0055], [0112], [0128]-[0131], [0162] and [0263]-[0281]. | 1-10 |
| X | KR 10-2019-0091155 A (LG CHEM, LTD.) 05 August 2019 (2019-08-05)<br>See paragraphs [0183]-[0192] and [0198]. | 1,3,5,6,8,10 |
| A | KR 10-0767614 B1 (AGERE SYSTEMS LLC) 18 October 2007 (2007-10-18)<br>See entire document. | 1-10 |
| A | KR 10-2005-0052266 A (SAMSUNG SDI CO., LTD.) 02 June 2005 (2005-06-02)<br>See entire document. | 1-10 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 February 2022** | **21 February 2022** |
| Name and mailing address of the ISA/KR<br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.
**PCT/KR2021/016671**

| Patent document cited in search report | Publication date (day/month/year) | Patent family member(s) | Publication date (day/month/year) |
|---|---|---|---|
| KR 10-1644252 B1 | 29 July 2016 | CN 104136376 A | 05 November 2014 |
| | | CN 104136376 B | 29 June 2016 |
| | | EP 2796415 A1 | 29 October 2014 |
| | | EP 2796415 B1 | 23 August 2017 |
| | | JP 2013-147416 A | 01 August 2013 |
| | | JP 5971109 B2 | 17 August 2016 |
| | | KR 10-2014-0126302 A | 30 October 2014 |
| | | US 2014-0377660 A1 | 25 December 2014 |
| | | US 9406930 B2 | 02 August 2016 |
| | | WO 2013-094701 A1 | 27 June 2013 |
| KR 10-2019-0132633 A | 28 November 2019 | CN 110366540 A | 22 October 2019 |
| | | JP 2018-172255 A | 08 November 2018 |
| | | JP 6929682 B2 | 01 September 2021 |
| | | WO 2018-181402 A1 | 04 October 2018 |
| KR 10-2019-0091155 A | 05 August 2019 | None | |
| KR 10-0767614 B1 | 18 October 2007 | AR 027130 A1 | 12 March 2003 |
| | | AU 2460501 A1 | 09 July 2001 |
| | | CA 2394146 A1 | 05 July 2001 |
| | | CN 100380717 C | 09 April 2008 |
| | | CN 1307374 A | 08 August 2001 |
| | | EP 1247303 A1 | 09 October 2002 |
| | | EP 1247303 B1 | 21 June 2017 |
| | | EP 2528146 A1 | 28 November 2012 |
| | | EP 2528146 B1 | 06 July 2016 |
| | | EP 2528147 A1 | 28 November 2012 |
| | | EP 2528147 B1 | 01 June 2016 |
| | | EP 2530767 A1 | 05 December 2012 |
| | | EP 2530767 B1 | 18 May 2016 |
| | | KR 10-2002-0064367 A | 07 August 2002 |
| | | MX PA02006464 A | 29 November 2002 |
| | | TW 523958 B | 11 March 2003 |
| | | US 2002-0006550 A1 | 17 January 2002 |
| | | US 2002-0119374 A1 | 29 August 2002 |
| | | US 2003-0206852 A1 | 06 November 2003 |
| | | US 6350543 B2 | 26 February 2002 |
| | | US 6623886 B2 | 23 September 2003 |
| | | US 7258821 B2 | 21 August 2007 |
| | | WO 01-48842 A1 | 05 July 2001 |
| KR 10-2005-0052266 A | 02 June 2005 | None | |

Form PCT/ISA/210 (patent family annex) (July 2019)